# EUROPÄISCHE PATENTSCHRIFT

(11) **EP 2 280 810 B1**
(45) Veröffentlichungstag und Bekanntmachung des Hinweises auf die Patenterteilung: **17.06.2015**
(21) Anmeldenummer: 09735803.0
(22) Anmeldetag: 14.04.2009
(51) Int. Cl.: B29B 9/06

(54) **VERFAHREN ZUM AUSRICHTEN EINER MESSERWELLE EINES GRANULATORS UND GRANULATOR ZUM HERSTELLEN VON KUNSTSTOFFGRANULAT**
METHOD FOR ALIGNING A CUTTER SPINDLE OF A GRANULATOR AND GRANULATOR FOR PRODUCING PLASTIC GRANULATE
PROCÉDÉ POUR ORIENTER UN ARBRE À LAME D UN GRANULATEUR ET GRANULATEUR POUR PRODUIRE DU GRANULAT SYNTHÉTIQUE

(30) Priorität: 23.04.2008 DE 102008020502
(43) Veröffentlichungstag der Anmeldung: 09.02.2011
(73) Patentinhaber: KraussMaffei Berstorff GmbH, 30625 Hannover (DE)
(72) Erfinder: PFEIFFER, Armin, 29227 Celle (DE); WEBER, Thorsten, 31787 Hameln (DE); VOIGT, Jürgen, 31311 Uetze (DE)
(74) Vertreter: Wilhelm, Ludwig
(86) Internationale Anmeldenummer: PCT/EP2009/054374
(87) Internationale Veröffentlichungsnummer: WO 2009/130138

(56) Entgegenhaltungen:
- EP-A- 0 418 941
- WO-A-02/100621
- DE-U1- 20 300 009

## Beschreibung

Die vorliegende Erfindung betrifft ein Verfahren zum Ausrichten einer Messerwelle eines Granulators und insbesondere eines Unterwassergranulators relativ zu einer Schneidplatte. Ferner erstreckt sich die Erfindung auf einen Granulator und insbesondere einen Unterwassergranulator zum Herstellen von Kunststoffgranulat, der einen Schneidkasten und eine Messerwelle aufweist, an der ein im Schneidkasten drehbar aufgenommener Messerträger gehaltert ist, und einen mit der Messerwelle verbindbaren Antriebsmotor, wobei im Betrieb der Messerträger mit einer Schneidplatte zusammenwirkt.

Granulatoren und insbesondere Unterwassergranulatoren werden zur Herstellung von Kunststoffgranulat eingesetzt. Hierbei wird durch eine Schneidplatte, die entsprechende Öffnungen aufweist, plastifiziertes Thermoplast gepresst und durch an den Öffnungen vorbeilaufende Messer, die üblicherweise von einem Messerhalter gehalten werden, abgestreift bzw. abgeschnitten. Im Fall eines Unterwassergranulators wird das so erhaltene Granulat in Form kurzer Kunststoffstränge von einem Wasserstrom abgekühlt und durch diesen gleichzeitig vom Schneidbereich weg transportiert. Der Abschneidvorgang wird üblicherweise durch rotierende Messer durchgeführt, die vor in einer Schneidplatte vorgesehenen Öffnungen rotieren. Hierzu wird der die Messer halternde Messerträger vor der Schneidplatte in Drehbewegung versetzt. Die Öffnungen sind üblicherweise im Wesentlichen kreisförmig und in einem von den Messern überstrichenen Schneidbereich in der bevorzugt beheizten Schneidplatte vorgesehen.

An die Qualität des so hergestellten Granulats werden hohe Anforderungen gestellt. Insbesondere soll das Granulat möglichst gleichförmig und gut rieselfähig erzeugt werden. Für eine hohe Qualität des erzeugten Granulats ist insbesondere wichtig, dass ein möglichst geringer und gleichförmiger Abstand der Messer zur Oberfläche der Schneidplatte, die die Öffnungen aufweist, gegeben ist. Je größer dieser Abstand wird, desto stärker können die Granulate beispielsweise sogenannte Fusseln oder Fäden entwickeln, d.h. ausgefranste Randbereiche, die beispielsweise einem guten Rieselverhalten entgegenstehen.

Um also eine gute Granulatqualität zu gewährleisten und zudem eine hohe Betriebssicherheit des Prozesses bereitzustellen, muss sichergestellt werden, dass der Abstand der Messer zur Oberfläche der Schneidplatte möglichst gering und gleichförmig ist. Hierzu muss die Messerwelle, mittels der der Messerträger drehbar gelagert ist, eine bestmögliche und im Wesentlichen rechtwinklige Ausrichtung zur Oberfläche der Schneidplatte aufweisen.

Diese Anforderung gewinnt insbesondere bei Zunahme von Anlagengrößen und damit auch der Erhöhung der Durchmesser der Lochkreise in der Schneidplatte an Bedeutung. Hier kann durch eine schlechte Ausrichtung zumindest bereichsweise schnell ein zu großer Schneidspalt entstehen. So können bei schlechter Ausrichtung die Messer beispielsweise in einem Bereich des Umfangs des von ihnen überstrichenen Kreisbogens die Schneidplatte kontaktieren und ungleichmäßig abgenutzt werden, während in einem anderen Bereich ein größerer Spalt entsteht, der zu einer schlechten Granulatqualität führt. Zudem bedeutet insbesondere bei großen Durchsätzen jede Standzeit einen sehr hohen wirtschaftlichen Verlust, denn eine Anlage, die beispielsweise 50 t/h verarbeitet, erzeugt täglich etwa 1.200.000 kg Polymergranulat. Eine solche Granulieranlage verfügt im allgemeinen zumindest über einen Extruder, einen Granulator und Nachfolgeeinrichtungen zur Weiterverarbeitung des Granulats.

Bislang wurde die Messerwellenposition durch Abuhren zur Schneidfläche bei Stillstand des Granulators ermittelt und manuell durch die Justierung von Stützgewinden korrigiert. Hierzu konnte beispielsweise eine Seite der Schneidkammer, in der der Messerträger samt Messern vor der Schneidplatte drehbar aufgenommen ist, geöffnet werden, um die Ausrichtung zu korrigieren. Hierbei liegt die Messgenauigkeit im Bereich von 0,01 mm und somit bewegt sich auch die Ausrichtgenauigkeit bestenfalls in dieser Größenordnung, wird jedoch im allgemeinen darüber, in etwa im Bereich von 0,03 mm liegen.

Dieses Ausrichten erfolgt allerdings nicht im Betrieb, sondern bei Stillstand des Granulators. Im Betrieb treten jedoch Störeinflüsse auf, wie beispielsweise extreme Temperaturunterschiede zwischen der Schneidplatte, die über 200° C warm sein kann, und dem Schneidraum, der derart temperiert sein muss, dass das erzeugte Granulat schnell abkühlt und sich verfestigt. Insbesondere im Fall von Unterwassergranulatoren, bei denen Wasser den Schneidraum durchströmt, liegen die Temperaturen in diesem vielfach unter 50° C. Hinzu kommt, dass der Wasserdruck die Ausrichtung ebenfalls beeinflusst. Aufgrund dieser Störeinflüsse, die sich beispielsweise in elastischen Deformationen einzelner Bauteile und unterschiedlicher thermischer Dehnung derselben äußern und eine Größenordnung von mehr als 0,01 mm ausmachen, nimmt die Einstellgenauigkeit zusätzlich ab. Im Hinblick darauf, dass der maximal zulässige Schneidspalt, bei dem noch eine ausreichende Qualität gewährleistet werden kann, bei ca. 0,1 mm liegt, wird deutlich, wie schwierig das Sicherstellen eines konstanten Schneidspalts über die gesamte Schneidplatte ist.

Um dieser Problematik zu entkommen und einen konstanten und insbesondere minimalen Schneidspalt garantieren zu können, wird häufig bei ständigem Andruck mit kardanischer Messerkopfführung gearbeitet. Dies bedeutet, dass zwischen den Messern und der Schneidplatte Kontakt besteht und ständig ein Anpressdruck wirkt, wodurch die Messer vorschnell verschleißen.
Die EP-A-0 418 941 offenbart einen Granulator gemäß dem Oberbegriff des Anspruchs 9 und ein Verfahren zum Betrieb des Granulators.

Aufgabe der vorliegenden Erfindung ist es deshalb, ein Verfahren und eine Vorrichtung bereitzustellen, die eine durchgängige sehr gute bis optimale Granulatqualität gewährleisten können, und zwar auch bei großen Granulatoren mit hohen Durchsätzen und bei denen ein einfaches Ausrichten auch in vollständig montiertem Zustand und insbesondere im Betrieb der Vorrichtung gegeben ist. Diese Aufgabe wird durch das Verfahren gemäß dem Anspruch 1 und die Vorrichtung gemäß dem Anspruch 9 gelöst.

Das erfindungsgemäße Verfahren zum Ausrichten einer Messerwelle eines Granulators und insbesondere eines Unterwassergranulators relativ zu einer Schneidplatte zeichnet sich durch die folgenden Schritte aus. Die Messerwelle wird mittels eines Antriebsmotors rotatorisch angetrieben. Dies findet bevorzugt im normalen Betrieb, also kontinuierlich statt. So kann gewährleistet werden, dass die Betriebsparameter und durch sie hervorgerufene Störeinflüsse entsprechend berücksichtigt werden. Dies trifft insbesondere im Fall von Unterwassergranulatoren zu, bei denen zusätzlich zum Betriebsdruck des Wassers ein besonders großer Temperaturunterschied zwischen Schneidplatte und dem vor der Schneidplatte liegenden Schneidraum herrscht, in dem der Messerträger mit den Messern drehbar gehalten ist.

Sodann wird eine auf die Messerwelle wirkende Kraft erfasst. Dies kann auf vielfältige Weise erfolgen, insbesondere ist darauf abzustellen, dass nicht zwangsläufig die Absolutkraft gemessen werden muss, sondern lediglich ein Indikator dafür, dass eine Kraft auf die Welle wirkt. Insbesondere ist hierbei auf die Kraftkomponente abzustellen, die zwischen Messerwelle und Schneidplatte wirkt. Das Feststellen einer solchen Kraft stellt insbesondere ein Indiz dafür dar, ob es zu einer Berührung zwischen den Messern auf dem Messerträger und der Schneidplatte kommt. Eine solche Kraft kann also auch beispielsweise durch ein zusätzliches wirkendes Drehmoment erfasst werden. Dieses Erfassen erfolgt bevorzugt kontinuierlich.

Aus der erfassten Kraft wird sodann ein entsprechendes Signal erzeugt, das bevorzugt indikativ für die herrschende Kraft ist, aber auch nur das Vorhandensein einer solchen Kraft, insbesondere in Richtung der Messerwelle, anzeigen kann. Ein solches Signal kann beispielsweise an einem Bildschirm oder ähnlichem ausgegeben werden.

In der Folge wird eine Ausrichtung der Messerwelle relativ zu der Schneidplatte in Abhängigkeit von dem Signal eingestellt. Das bedeutet, dass ausgehend vom Feststellen einer auf die Messerwelle wirkenden Kraft eine entsprechende Ausrichtung und insbesondere Winkelausrichtung der Messerwelle relativ zu der Schneidplatte erfolgt.

Vorteilhaft an dem erfindungsgemäßen Verfahren ist insbesondere, dass diese Ausrichtung während des Betriebs des Granulators erfolgen kann und so Störeinflüsse eine optimale Berücksichtigung finden können. Es muss nicht weiter wie früher eine Trockenjustierung im Vorfeld erfolgen, deren Präzision im Betrieb erst anhand der Granulatqualität überprüft werden kann, und bei der gegebenenfalls weitere Stillstände der Vorrichtung notwendig waren, um die Ausrichtung weiter zu optimieren.

Ein weiterer Vorteil des erfindungsgemäßen Verfahrens ist, dass es ermöglicht wird, in regelmäßigen Intervallen eine erneute Ausrichtung bzw. Nachjustierung vorzunehmen, ohne den Betrieb des Granulators einstellen zu müssen. Hierdurch können aufwändige und teure Stillstandzeiten des Granulators und der mit ihm zusammenarbeitenden Extrusionsanlage sowie eventueller Nachfolgeeinrichtungen effektiv vermieden werden.

So kann nach einer bei einer ersten Einrichtung des Granulators bzw. der gesamten Granulieranlage erfolgten Vorabjustierung im Trockenen, d. h. einer Grobausrichtung des Granulators und der Messerwelle auf die Schneidplatte, sowohl die Feinausrichtung als auch jegliche Nachfolgeausrichtung im Wesentlichen im Betrieb erfolgen und erfordert keinen Stillstand der Granulieranlage. Lediglich bei Austausch der Messer beispielsweise aufgrund von Abnutzung ist somit die Granulieranlage anzuhalten.

Gemäß einer bevorzugten Weiterbildung der Erfindung erfolgt das Einstellen der Ausrichtung und insbesondere der Winkelausrichtung durch Betätigung von Verstellmitteln. Diese Verstellmittel können beispielsweise motorisch, insbesondere elektromotorisch, oder hydraulisch oder thermisch oder pneumatisch oder manuell ansteuerbar sein.

Besonders bevorzugt kann das erfindungsgemäße Verfahren folgende weiteren Schritte aufweisen: Bei angetriebener Messerwelle und Erfassen einer auf die Messerwelle wirkenden Kraft, wodurch ein entsprechendes Signal erzeugt wird, wird ein erstes Verstellmittel so lange betätigt, bis das erzeugte Signal eine festgesetzte Schwelle überschreitet. Sobald diese Schwelle überschritten wird, wird das erste Verstellmittel gegenläufig betätigt, bis das erzeugte Signal die festgesetzte Schwelle unterschreitet. Diese Schwelle kann der für das ursprüngliche Betätigen festgesetzten Schwelle entsprechen, abhängig von der Methode des Erfassens können hierfür aber auch unterschiedliche Schwellwerte festgesetzt werden.

Sodann wird ein zweites Verstellmittel betätigt, bis das erzeugte Signal, das für eine zwischen Messerwelle und Schneidplatte wirkende Kraft indikativ ist, eine festgesetzte Schwelle überschreitet. Hierbei kann es sich um denselben Schwellwert handeln wie bei der für das erste Verstellmittel festgesetzten Schwelle. Sodann wird das zweite Verstellmittel gegenläufig betätigt, bis das erzeugte Signal eine festgesetzte Schwelle unterschreitet.

Es werden also im Voraus eine oder mehrere Schwellen bzw. Schwellwerte definiert, die für eine auf die Messerwelle wirkende Kraft aussagekräftig sind und insbesondere erfassen, wenn zwischen dieser bzw. den an ihr beispielsweise über einen Messerträger gehalterten Messern und der Schneidplatte ein Kontakt entsteht.

Sobald das erste Verstellmittel so lange betätigt wurde, bis es zu einem solchen Kontakt zwischen den an der Messerwelle gehalterten Messern und der Schneidplatte kommt, wird das Verstellmittel gegenläufig betätigt, um die Messer gerade wieder abzuheben, so dass ein minimaler Spalt und kein Vollkontakt zwischen Messer und Schneidplatte herrscht. Es handelt sich also um eine lediglich geringfügige gegenläufige Bewegung. Sodann wird ein zweites Verstellmittel gleichermaßen betätigt, bis es auch aufgrund der hierdurch bewirkten Ausrichtbewegung zu einer Krafteinwirkung auf die Messerwelle, insbesondere durch Berührung der Messer mit der Schneidplatte kommt, was durch das Überschreiten einer Schwelle durch das erzeugte Signal angezeigt wird. Das zweite Verstellmittel wird dann ebenso wie das erste gegenläufig betätigt, bis eine festgesetzte Schwelle unterschritten ist, die wiederum dieselbe sein kann. Die Verstellmittel greifen hierbei insbesondere an unterschiedlichen Punkten im Raum an, so dass sie unterschiedliche Ausrichtbewegungen hervorrufen.

Besonders bevorzugt wird auch noch ein drittes Verstellmittel gleichermaßen wie die ersten beiden Verstellmittel betätigt, bis das erzeugte Signal eine festgesetzte Schwelle überschreitet und sodann gegenläufig betätigt, bis das erzeugte Signal eine festgesetzte Schwelle, im allgemeinen dieselbe, wieder unterschreitet. Es wird also jeweils mit jedem Verstellmittel so lange die Ausrichtung der Messerwelle, und insbesondere die Winkelausrichtung derselben verstellt, bis es zu einem Signal entsprechender Stärke kommt, das im allgemeinen darauf hindeutet, dass ein Kontakt zwischen den Messern und der Schneidplatte entsteht, und sodann wird durch eine geringfügige rückläufige Bewegung der Kontakt gerade aufgehoben.

Dadurch, dass dies mit drei unterschiedlichen Verstellmitteln vorgenommen wird, lässt sich einfach und effektiv die sogenannte Nullspaltposition auffinden, bei der es gerade zu keinem Kontakt zwischen Messern und Schneidplatte kommt. Das Vorsehen und Verwenden von drei Verstellmitteln, die bevorzugt an verschiedenen Angriffspunkten relativ zur Messerwelle angreifen, erlaubt eine besonders einfache Ausrichtung. Nach dem jeweiligen Betätigen werden die Verstellmittel im allgemeinen fixiert, um eine feste Ausrichtung der Messerwelle relativ zur Schneidplatte zu gewährleisten.

Hierbei kann in besonders vorteilhafter Weise durch gleichzeitiges und insbesondere gleichstarkes Betätigen aller Verstellmittel eine Ausrichtung der Messerwelle entlang deren Längsachse erfolgen, wodurch sich der Messerverschleiß effektiv kompensieren lässt.

Das Einstellen der Ausrichtung und insbesondere der Winkelausrichtung erfolgt durch Verschwenken der Messerwelle um mindestens zwei und insbesondere drei Schwenkachsen, die miteinander einen Winkel einschließen. So kann die Messerwellenposition und insbesondere ihre Ausrichtung relativ zur Schneidplatte im Raum eindeutig erfolgen und eine rechtwinklige Anordnung der Messerwelle bzw. eine im Wesentlichen parallele Anordnung der Messerschneiden zur Schneidplatte bzw. deren Oberfläche sichergestellt werden.

Vorteilhafterweise liegen die Schwenkachsen im Wesentlichen parallel zur Schneidplatte und damit im Wesentlichen senkrecht zur Längsachse der Messerwelle. Bevorzugt können die Schwenkachsen in einer einzigen Ebene liegen, die sich parallel zur Schneidplatte erstreckt. Hierdurch lässt sich eine besonders einfache Ausrichtung bewerkstelligen.

Das Erfassen einer auf die Messerwelle wirkenden Kraft erfolgt bevorzugt durch Messen der Stromaufnahme des Antriebsmotors. Sobald es zu einem Kontakt zwischen den Messern und der Schneidplatte kommt, steigt die Stromaufnahme des Antriebsmotors aufgrund des zunehmenden Widerstandes und des resultierenden Drehmomentenanstiegs an, so dass sie ein gutes Indiz für einen Kontakt und somit eine auf die Messerwelle wirkende Kraft ist. Da der Antriebsmotor ohnehin kontinuierlich läuft, ist es besonders bevorzugt, diese Größe als Indikator zu messen, da hierfür keine weiteren Sensoren vorzusehen sind, die ihrerseits wieder störanfällig sein könnten. Es können aber auch alternativ andere für eine auf die Messerwelle wirkende Kraft repräsentative Größen erfasst werden, beispielsweise durch Drucksensoren in der Schneidplatte oder im Bereich des Messerträgers oder der Messerwelle. So kann beispielsweise im Bereich der Messerwelle eine Kraftmessdose vorgesehen sein. Ein aufgrund des Kontakts ansteigendes Drehmoment, das ein Indikator für eine auf die Messerwelle wirkende Kraft ist, kann auch durch beliebige andere Drehmomentgeber erfasst werden, beispielsweise durch Dehnmessstreifen im Bereich der Messerwelle.

Gemäß einer bevorzugten Weiterbildung der Erfindung kann das Einstellen der Ausrichtung und insbesondere der Winkelausrichtung im Wesentlichen schrittweise und bei Vorsehen von mehreren Verstellmitteln insbesondere abwechselnd erfolgen. Dies ermöglicht es, in kleinen Schritten eine Ausrichtung und somit Verstellung der Messerwelle relativ zur Schneidplatte vorzunehmen, bis ein entsprechendes Signal auf das Erfassen einer auf die Messerwelle wirkenden Kraft hinweist, wonach dann ein schrittweises gegenläufiges Verfahren den Kontakt zwischen Messern und Schneidplatte eliminiert. Dies hat den Vorteil, dass es zu keiner zu starken Auslenkung der Messerwelle aufgrund beispielsweise eines starken Verfahrens mittels nur eines Verstellmittels kommt, sondern man sich der Idealposition in kleinen Schritten annähert. Insbesondere können die einzelnen Schritte und bei Vorsehen von beispielsweise drei Verstellmitteln die einzelnen Verstellmittel jeweils abwechselnd schrittweise verfahren werden, bis eine Schwelle erreicht wird, die Kontakt anzeigt. Das zuletzt betätigte Verstellmittel kann dann geringfügig gegenläufig bewegt werden. Dieses Procedere, Verfahren bis es zu Kontakt kommt und geringfügiges Zurückfahren kann mehrfach für alle Verstellmittel wiederholt werden, so dass eine optimale Ausrichtung erzielt werden kann.

Besonders bevorzugt erfolgt das erfindungsgemäße Einstellen der Ausrichtung und insbesondere der Winkelausrichtung programmgesteuert. Es ist also eine Steuerungsvorrichtung vorgesehen, mittels derer eine auf die Messerwelle wirkende Kraft erfasst wird, ein entsprechendes Signal erzeugt wird und in Abhängigkeit davon die Ausrichtung der Messerwelle relativ zu der Schneidplatte eingestellt wird und insbesondere die Verstellmittel angesteuert werden. Als Verstellmittel kommen hier beispielsweise solche in Betracht, bei denen mittels Servomotoren die Ausrichtung der Messerwelle gegenüber der Schneidplatte verändert werden kann. Dies kann derart geschehen, dass entweder das Granulatorgehäuse gegenüber der Schneidplatte ausgerichtet wird, wobei die Messerwelle in fester Relation in Hinsicht auf Winkel- und axiale Ausrichtung zum Schneidkasten stehen müsste. Alternativ kann beispielsweise ein Lagergehäuse, in dem die Messerwelle gelagert ist, relativ zum Schneidkasten ausgerichtet werden. Das Ausrichten kann beispielsweise auch durch Hydraulikzylinder oder thermisch beheizte Bolzen, deren Ausdehnungskoeffizient für die Ausrichtung genutzt wird, erfolgen.

Gemäß einer besonders bevorzugten Ausgestaltungsform des erfindungsgemäßen Verfahrens wird die auf die Messerwelle wirkende Kraft kontinuierlich erfasst. Dies gewährleistet es, durchgängig zu kontrollieren, ob es zu Unregelmäßigkeiten kommt und insbesondere, ob es zu einem Kontakt zwischen den Messerschneiden und der Schneidplatte kommt. Im Falle eines solchen Kontaktes kann dann beispielsweise ein Alarm ausgegeben werden, der zu einer Überprüfung der Ausrichtung führt, oder aber ggf. im Falle von einem Abnehmen des Signals, beispielsweise aufgrund zunehmendem Abstand zwischen Messern und Schneidplatte durch Abnutzung der Messer eine insbesondere automatische Neuausrichtung durchgeführt werden.

Besonders vorteilhaft am vorliegenden erfindungsgemäßen Verfahren ist, dass das Ausrichten während des Betriebs des Granulators und insbesondere Unterwassergranulators erfolgt, wodurch die Betriebsparameter und insbesondere auch die durch sie hervorgerufenen Effekte wie beispielsweise Deformationen aufgrund von Temperaturdifferenzen oder auf den Schneidkasten und die Welle wirkenden Wasserdruck bei der Ausrichtung optimal berücksichtigt werden können. Zusätzlich zu einer Erstausrichtung unter Betriebsbedingungen kann auch eine kontinuierliche Nachführung und Nachausrichtung während des Betriebs erfolgen, wodurch einerseits auftretende Ungenauigkeiten zeitnah kompensiert werden können und andererseits auch eine Abnutzung der Messer ausgeglichen werden kann. Hierzu kann beispielsweise in regelmäßigen, vorgegebenen Abständen eine automatische Nachausrichtung programmgesteuert erfolgen.

Die vorliegende Erfindung betrifft auch einen Granulator und insbesondere einen Unterwassergranulator zum Herstellen von Kunststoffgranulat mit einem Schneidkasten und einer Messerwelle, an der ein im Schneidkasten drehbar aufgenommener Messerträger gehaltert ist, der im Betrieb mit einer Schneidplatte zusammenwirkt und einem mit der Messerwelle verbindbaren Antriebsmotor. Erfindungsgemäß sind Mittel zum Erfassen einer auf die Messerwelle wirkenden Kraft vorgesehen, Mittel zum Erzeugen eines entsprechenden Signals und Verstellmittel zum Einstellen der Ausrichtung und insbesondere der Winkelausrichtung der Messerwelle relativ zu der Schneidplatte in Abhängigkeit von dem erzeugten Signal.

Ein solcher Granulator erlaubt es, eine Ausrichtung der Messerwelle relativ zu der Schneidplatte, an der die an dem mit der Messerwelle verbundenen Messerträger vorgesehenen Messer vorbei rotieren, einfach und insbesondere auch während des Betriebs vorzunehmen. So kann einfach eine hohe Granulatqualität, die mit einem möglichst konstanten und geringen Spalt zwischen Messern und Schneidplatte korreliert, gewährleistet werden bei gleichzeitig geringen Standzeiten der entsprechenden Granulieranlage.

Besonders bevorzugt sind die Verstellmittel an einem Lagergehäuse und insbesondere an einer Lagerplatte der Messerwelle angelenkt. Die Messerwelle wird bevorzugt außerhalb des Schneidkastens des Granulators in einem separaten Lagergehäuse radial und axial gelagert, wobei das Lagergehäuse selbst häufig elastisch gelagert ist, um im Fall von Ausrichtungsbewegungen der Messerwelle diesen nachgeben zu können. Das Lagergehäuse kann im Wesentlichen zweiteilig ausgestaltet sein und beispielsweise ein elastisch gelagertes Basisteil aufweisen, auf dem mittels eines Schlittens ein Oberteil des Gehäuses axial beweglich gelagert ist, um so auch axiale Verstellungen der Messerwelle zuzulassen. Besonders bevorzugt kann eine Lagerplatte fest mit dem Lagergehäuse bzw. zumindest einem Teil desselben, in dem die Messerwelle gelagert ist, verbunden sein. Die Lagerplatte kann durch eine definierte Form wie beispielsweise eine Dreiecksgestalt gute Anlenkpunkte bereitstellen, so dass insbesondere eine gute Ausrichtbarkeit des Lagergehäuses relativ zum Schneidkasten ermöglicht wird. Der Schneidkasten kann in diesem Fall fest mit der Schneidplatte verbunden sein, was insbesondere eine gute Abdichtung zwischen Schneidkasten und Schneidplatte ermöglicht. Die Durchführung der Messerwelle in den Schneidkasten kann dann derart ausgelegt sein, dass sie geringfügige Verschiebungen und Winkelverstellungen zulässt und trotzdem im Wesentlichen abdichtend wirkt, was insbesondere im Fall von Unterwassergranulatoren von Bedeutung ist.

Gemäß einer besonders bevorzugten Ausgestaltung sind insbesondere drei Verstellmittel vorgesehen, mittels derer die Ausrichtung erfolgt. Über drei Punkte im Raum, die durch die Verstellmittel festgelegt werden, lässt sich die Messerwellenposition eindeutig im Raum definieren. Die drei Verstellmittel sind vorzugsweise in Umfangsrichtung symmetrisch zur Messerwelle angeordnet. So können sie beispielsweise an den drei Eckpunkten eines gleichschenkligen Dreiecks angeordnet sein, wobei beispielsweise eine mit einem Lagergehäuse verbundene Lagerplatte im Wesentlichen eine Dreiecksgestalt aufweisen kann und an ihren Eckpunkten die Verstellmittel anlenkbar sind. Bei Verstellvorgängen können jeweils zwei Verstellmittel momentan festgestellt sein, während das dritte relativ bewegt wird.

Bevorzugt sind die Verstellmittel motorisch oder hydraulisch oder thermisch oder pneumatisch oder manuell ansteuerbar. Besonders bevorzugt können die Verstellmittel automatisch in Abhängigkeit des erzeugten Signals einstellbar sein. Es hat sich beispielsweise als vorteilhaft erwiesen, Servomotor-betätigte Spindeltriebe als Verstellmittel vorzusehen. Die Spindeln können hierbei in einer Wand des Schneidkastens drehbar gelagert sein und mit einer Mutter im Bereich der Lagerplatte zusammenwirken. Durch das Verstellen der Abstände insbesondere an drei verschiedenen Punkten im Raum zwischen dem Lagergehäuse und dem Schneidkasten oder alternativ zwischen dem Schneidkasten und der Schneidplatte kann so eine Ausrichtung der Messerwelle gegenüber der Schneidplatte erfolgen. Insbesondere kann bei gleichzeitigem Betätigen der Verstellmittel eine axiale Ausrichtung und bei separatem Betätigen eine Winkelausrichtung der Messerwelle relativ zur Schneidplatte bzw. deren Oberfläche erfolgen.

Gemäß einer besonders bevorzugten Ausführungsform des erfindungsgemäßen Granulators ist eine Steuereinrichtung vorgesehen zur Ansteuerung der Verstellmittel, die in Abhängigkeit von den erzeugten Signalen arbeitet und eine entsprechende Ausrichtung der Messerwelle relativ zur Schneidplatte vornimmt. Dies erfolgt bevorzugt auch im Betrieb. So kann vorteilhaft eine Automatisierung der Ansteuerung der Verstellmittel erfolgen und beispielsweise in regelmäßigen, vorgegebenen Abständen eine Nachjustierung vorgenommen werden. Zudem kann beim ersten Einrichten des erfindungsgemäßen Granulators das Ausrichten im Wesentlichen automatisch aufgrund der entsprechend ausgebildeten Steuereinrichtung erfolgen, so dass schnell und einfach zur korrekten Ausrichtung der Messerwelle relativ zur Schneidplatte gefunden wird und die reguläre Produktion beginnen kann.

Gemäß einer bevorzugten Weiterbildung der vorliegenden Erfindung sind als Mittel zum Erfassen einer auf die Messerwelle wirkenden Kraft Mittel zur Aufnahme des Motorstroms des Antriebsmotors vorgesehen. Der Motorstrom ist ein einfach erfassbarer und sicherer Indikator dafür, dass es zum Kontakt zwischen den Messern auf dem Messerträger und der Schneidplatte kommt bzw. dass der Abstand sehr gering wird, denn durch die Zunahme des Drehmoments erhöht sich die Stromaufnahme. Vorteilhaft hieran ist zudem, dass keine weiteren Sensoren im Bereich der Schneidplatte oder der Messerwelle vorzusehen sind, so dass die Fehleranfälligkeit des Granulators abnimmt.

Die vorliegende Erfindung soll anhand einer in den folgenden Figuren dargestellten Ausführungsform beispielhaft erläutert werden. Es zeigen
- Figur 1: einen Unterwassergranulator gemäß der Erfindung in schematischer Schnittdarstellung und
- Figur 2: den Unterwassergranulator in schematischer Draufsicht.

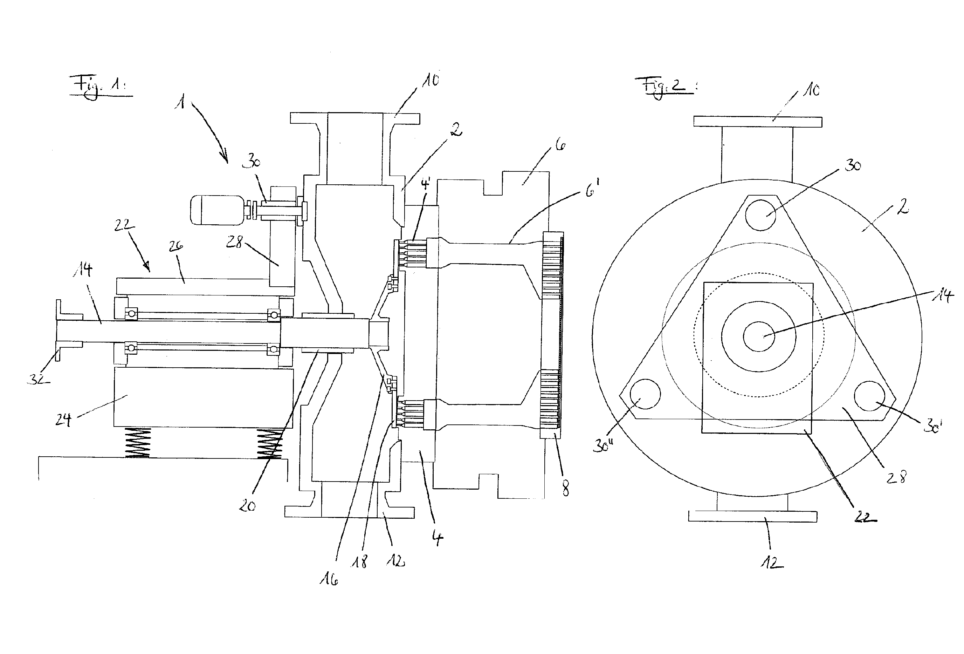

In Figur 1 ist ein Unterwassergranulator 1 in Schnittdarstellung gezeigt, der über einen Schneidkasten 2 verfügt, in dem ein Messerträger 16 mit Messern 18 drehbar gehaltert ist. Die Messer 18 rotieren mit geringfügigem bis verschwindendem Abstand vor der Schneidplatte 4 und den Ausgängen von in dieser vorgesehenen Öffnungen 4'. Die Schneidplatte 4 ist mit einem Düsenflansch 6 eines nicht dargestellten Extruders verbunden. Im Düsenflansch 6 sind Verbindungskanäle 6' vorgesehen, über die Schmelze vom Extruder zu den Öffnungen 4' in der Schneidplatte 4 geliefert wird. Bevor die Schmelze in die Verbindungskanäle 6' eintritt, passiert sie einen Schmelzefilter 8, um mögliche Verunreinigungen zu entfernen und ein Verstopfen der Öffnungen 4' zu vermeiden. Der Schneidkasten 2 und die Schneidplatte 4 sind fest miteinander verbunden, ebenso wie die Schneidplatte 4 und der Düsenflansch 6. Die aus den Öffnungen 4' in Strangform austretende Schmelze wird durch die rotierenden Messer 18 geschnitten und bildet das Granulat. Über einen Wasserzulauf 12 wird Kühlwasser in den Schneidkasten 2 eingeführt, das das erzeugte Granulat sofort abkühlt und von der Schneidfläche weg transportiert. Dies erfolgt über einen Wasserablauf 10, von dem das Kühlwasser samt Granulat zu entsprechenden Nachfolgeeinrichtungen gelangt.

Der Messerträger 16 ist mit einer Messerwelle 14 verbunden, die unter Zwischenschaltung von Abdichtmitteln 20 in den Schneidkasten ragt. Die Abdichtmittel 20 sind solchermaßen ausgestaltet, dass sie geringfügige axiale und Winkelverschiebungen der Welle gegenüber der Wandung des Schneidkastens 2 tolerieren und ihre abdichtende Wirkung beibehalten. Die Messerwelle 14 ist in einem Lagergehäuse 22 drehbar gelagert, über eine Kupplung 32 ist ein nicht näher dargestellter Antriebsmotor mit ihr verbunden.

Das Lagergehäuse 22 besteht aus einer Lagergehäusebasis 24, die elastisch mit einem Maschinentisch oder ähnlichem verbunden ist. Auf der Lagergehäusebasis 24 ist ein Lagergehäuseschlitten 26 axial verschieblich gelagert. Der Lagergehäuseschlitten legt die Messerwelle 14 axial fest. Mit dem Lagergehäuseschlitten 26 ist eine im Wesentlichen dreieckig ausgeführte Lagerplatte 28 fest verbunden, an der Verstellmittel 30 vorgesehen sind, die mit dem Schneidkasten 2 zusammenwirken und die relative Lage des Lagergehäuseschlittens bzw. des Lagergehäuses 22 und somit der Messerwelle 14 relativ zur Schneidplatte 4 festlegen.

In Figur 2 ist der erfindungsgemäße Unterwassergranulator schematisch in der Draufsicht dargestellt. Der Schneidkasten 2 wird über den Wasserzulauf 12 mit Kühlwasser versorgt, das erzeugte Granulat und das erwärmte Kühlwasser werden über den Wasserablauf 10 abgeführt. Die Messerwelle 14 ist im Schnitt zu sehen, schematisch ist der von den Messern 18 überstrichene Kreis auf der Schneidplatte 4 dargestellt, in welchem Bereich sich die Öffnungen 4' für die Extrusion der Schmelzestränge befinden. Das Lagergehäuse 22 ist nun sehr schematisch gezeigt, die Lagerplatte 28, die mit dem Lagergehäuseschlitten 26 fest verbunden ist, hat im Wesentlichen eine dreieckige Grundform, an den Ecken des Dreiecks sind die Verstellmittel 30 angelenkt, und zwar symmetrisch über den Umfang zur Messerwelle 14.

Für einen guten Betrieb des erfindungsgemäßen Unterwassergranulators muss eine möglichst exakte Ausrichtung der Messerwelle 14 relativ zur Schneidplatte 4 gewährleistet werden, insbesondere darf der Abstand zwischen den Messern 18 und der von ihnen überstrichenen Oberfläche der Schneidplatte 4 im Bereich der Öffnungen 4' nicht zu groß werden, sondern sollte möglichst konstant und minimal sein. Die Mess- und Einstellgenauigkeit sollte hier bevorzugt im Bereich von 0,01 mm liegen. Ausgehend von einer korrekten Ausrichtung des Messerträgers 16 und der Messer 18 relativ zur Messerwelle 14 sollte diese also möglichst rechtwinklig relativ zur Schneidplatte 4 ausgerichtet sein. Aufgrund der im Betrieb auftretenden Störeinflüsse, wie der Temperaturunterschiede zwischen dem Schneidkasten 2 und der Schneidplatte 4 aufgrund des Kühlwassers im Schneidkasten 2 einerseits und der Erwärmung der Schneidplatte 4 durch die Schmelze und ggf. vorgesehene zusätzliche Beheizung andererseits sowie des Drucks des durchlaufenden Wassers, ist es nicht möglich, eine exakte Einstellung der Messerwelle 14 relativ zur Schneidplatte 4 im trockenen Zustand, d. h. außerhalb des Betriebs, vorzunehmen.

Vielmehr muss eine Vorabausrichtung erfolgen, die erst im Betrieb nachjustiert werden kann. Dies erfolgt gemäß einer bevorzugten Ausgestaltung der Erfindung derart, dass die Stromaufnahme des Antriebsmotors kontinuierlich gemessen wird, da ein plötzlicher Stromanstieg ein eindeutiges Indiz für einen Kontakt der Messer 18 zur Schneidplatte 4 ist. Die Ausrichtung der Messerwelle 14 ist durch drei Stützpunkte definiert, nämlich die Punkte, an denen die Verstellmittel 30, 30', 30" an der Lagerplatte 28 angreifen. Durch schrittweises Verstellen eines der Verstellmittel 30 und somit Ändern des Abstands der Lagerplatte 28 relativ zum Schneidkasten 2 und somit zur Schneidplatte 4 wird die Ausrichtung der Messerwelle 14 um eine parallel zur Oberfläche der Schneidplatte liegende Achse verschwenkt. Diese Verstellung wird fortgeführt, bis die Stromaufnahme des Antriebsmotors ein entsprechendes Ansteigen aufweist, das einem Kontakt zwischen Messern 18 und Schneidplatte 4 entspricht. Bei Erzeugen eines entsprechenden Signals wird der Verschwenkvorgang mit dem entsprechenden Verstellmittel 30 gegenläufig durchgeführt. Hierbei handelt es sich nur um eine sehr geringfügige gegenläufige Bewegung, die sicherstellen soll, dass gerade kein Kontakt zwischen Messern 18 und Schneidplatte 4 vorliegt.

Nun wird an einem zweiten Stützpunkt, der wie in der Figur gezeigt bevorzugt um ca. 60° verdreht ist, so dass auch die Schwenkachse im Wesentlichen um 60° zur ersten Schwenkachse verdreht ist, und ebenfalls parallel zur Oberfläche der Schneidplatte 4 liegt, das Verfahren fortgesetzt. Das entsprechende Verstellmittel 30' wird schrittweise verstellt, so dass die Lagerplatte 28 und somit das Lagergehäuse 22 und die Messerwelle 14 relativ zur Schneidplatte verschwenkt wird, bis ein entsprechendes Signal einen Anstieg der Stromaufnahme des Antriebsmotors und somit Kontakt der Messer 18 mit der Schneidplatte 4 signalisiert. Das entsprechende Verstellmittel 30' wird wiederum leicht zurückgesetzt, um gerade einen Kontakt zu vermeiden.

Dasselbe Verfahren wird nun am dritten Stützpunkt durchgeführt, der eine relativ zu den ersten beiden Verschwenkachsen verdrehte Schwenkachse aufweist. Auch hier wird das entsprechende Verstellmittel 30" so lange schrittweise verstellt, bis ein Signal den Kontakt zwischen Messern 18 und Schneidplatte 4 anzeigt und sodann das Verstellmittel 30" leicht zurückgesetzt. So kann garantiert werden, dass eine optimale rechtwinklige Ausrichtung der Messerwelle 14 relativ zur Schneidplatte gefunden wird, bei der nur ein minimaler Spalt zwischen Messern 18 und Oberfläche der Schneidplatte 4 gegeben ist, so dass Granulat mit optimaler Qualität geschnitten werden kann.

Soll auch eine axiale Ausrichtung der Messerwelle 14 relativ zur Schneidplatte 4 erfolgen, so können alle Verstellmittel 30, 30', 30" gleichzeitig in gleichem Maße verstellt werden, wodurch eine axiale Veränderung der Lage der Messerwelle 14 relativ zur Schneidplatte 4 erfolgt, und zwar ohne eine Änderung der Winkelausrichtung. In diesem Falle würde der Lagergehäuseschlitten 26 relativ zur Lagergehäusebasis 24 verschoben und durch die Verstellmittel 30, 30', 30" sodann in der angefahrenen Lage, die wieder dadurch gefunden wird, dass ein Anstieg der Motorstromaufnahme erzielt wird und sodann ein leichtes Zurücksetzen erfolgt, festgestellt werden.

Besonders bevorzugt handelt es sich bei den Verstellmitteln 30, 30', 30" um Spindeltriebe, die von Servomotoren betätigt werden, die über eine entsprechend ausgelegte Steuerung in Abhängigkeit von dem der Motorstromaufnahme entsprechenden Signal und ggf. der Betriebsdauer automatisch angesteuert werden.

Im Falle einer Winkelausrichtung der Messerwelle 14 relativ zur Schneidplatte 4 sorgt die elastische Verbindung des Lagergehäuses 22 mit dem Untergrund dafür, dass diese Verschwenkwinkel, die sich im allgemeinen im kleineren Bereich bewegen, ausgeglichen werden können. Die Abdichtmittel 20 unterstützen ebenfalls solche Korrekturen in axialer und in Winkellage. Die Kupplung 32 ist derart ausgebildet, dass die leichten Winkel- oder Abstandsveränderungen zwischen Messerwelle und dem nicht näher dargestellten Antriebsmotor ausgeglichen werden.

Das Ausrichten kann insbesondere beim ersten Inbetriebnehmen eines Granulators nach längeren Stillstandzeiten auch mehrfach wiederholt durchgeführt werden, um so eine noch bessere Ausrichtgenauigkeit zu erzielen. Zudem kann es in regelmäßigen Abständen, die bevorzugt aufgrund von Erfahrung einzustellen sind, wiederholt werden, um auch über längere Dauer einen optimalen Abstand zwischen Messern 18 und Oberfläche der Schneidplatte 4 zu gewährleisten und so hochwertiges Granulat erzeugen zu können. Insbesondere hierbei ist es auch von Vorteil, eine axiale Ausrichtung der Messerwelle 14 zur Schneidplatte 4 überprüfen zu können, denn dadurch kann der im Betrieb erfolgende Verschleiß der Messer ausgeglichen werden.

### Bezugszeichenliste

- 1: Unterwassergranulator
- 2: Schneidkasten
- 4: Schneidplatte
- 4': Öffnungen
- 6: Düsenflansch
- 6': Verbindungskanal
- 8: Schmelzefilter
- 10: Wasserablauf
- 12: Wasserzulauf
- 14: Messerwelle
- 16: Messerträger
- 18: Messer
- 20: Abdichtmittel
- 22: Lagergehäuse
- 24: Lagergehäusebasis
- 26: Lagergehäuseschlitten
- 28: Lagerplatte
- 30: erstes Verstellmittel
- 30': zweites Verstellmittel
- 30": drittes Verstellmittel
- 32: Kupplung

## Patentansprüche

1. Verfahren zum Ausrichten einer Messerwelle eines Granulators, insbesondere eines Unterwassergranulators, relativ zu einer Schneidplatte (4) im Betrieb mit folgenden Schritten:
- rotatorisches Antreiben der Messerwelle (14) mittels eines Antriebsmotors,
- Erfassen einer auf die Messerwelle (14) wirkenden Kraft,
- Erzeugen eines entsprechenden Signals und
- Einstellen der Ausrichtung und insbesondere der Winkelausrichtung der Messerwelle (14) relativ zu der Schneidplatte (4) in Abhängigkeit von dem Signal durch Verschwenken der Messerwelle (14) um mindestens zwei Schwenkachsen, die miteinander einen Winkel einschließen, so dass eine parallele, Ausrichtung der an der Messerwelle angebrachten Messerschneiden zur Schneidplatte im Betrieb erfolgt.

2. Verfahren nach Anspruch 1, **gekennzeichnet durch** folgende Schritte:
- Betätigen eines ersten Verstellmittels (30) bis das erzeugte Signal eine festgesetzte Schwelle überschreitet,
- gegenläufiges Betätigen des ersten Verstellmittels (30), bis das erzeugte Signal eine festgesetzte Schwelle unterschreitet,
- Betätigen eines zweiten Verstellmittels (30') bis das erzeugte Signal eine festgesetzte Schwelle überschreitet,
- gegenläufiges Betätigen des zweiten Verstellmittels (30'), bis das erzeugte Signal eine festgesetzte Schwelle unterschreitet

3. Verfahren nach Anspruch 2, **gekennzeichnet durch** folgende Schritte:
- Betätigen eines dritten Verstellmittels (30") bis das erzeugte Signal eine festgesetzte Schwelle überschreitet,
- gegenläufiges Betätigen des dritten Verstellmittels (30"), bis das erzeugte Signal eine festgesetzte Schwelle unterschreitet.

4. Verfahren nach einem der Ansprüche 2 - 3, **dadurch gekennzeichnet, dass** durch gleichzeitiges Betätigen der Verstellmittel (30, 30', 30") eine Ausrichtung der Messerwelle (14) entlang deren Längsachse erfolgt.

5. Verfahren nach einem der Ansprüche 1 - 4, **dadurch gekennzeichnet, dass** das Erfassen einer auf die Messerwelle (14) wirkenden Kraft durch Messen der Stromaufnahme des Antriebsmotors oder mittels einer Kraftmessdose erfolgt.

6. Verfahren nach einem der Ansprüche 1 - 5, **dadurch gekennzeichnet, dass** das Einstellen der Ausrichtung im Wesentlichen schrittweise erfolgt.

7. Verfahren nach einem der Ansprüche 1 - 6, **dadurch gekennzeichnet, dass** das Einstellen der Ausrichtung programmgesteuert erfolgt.

8. Verfahren nach einem der Ansprüche 1 - 7, **dadurch gekennzeichnet, dass** das Erfassen der auf die Messerwelle (14) wirkenden Kraft kontinuierlich erfolgt.

9. Granulator, insbesondere Unterwassergranulator, zum Herstellen von Kunststoffgranulat, mit einem Schneidkasten (2) und einer Messerwelle (14), an der ein im Schneidkasten (2) drehbar aufgenommener Messerträger gehaltert ist, der im Betrieb mit einer Schneidplatte (4) zusammenwirkt, und einem mit der Messerwelle (14) verbindbaren Antriebsmotor,
Mitteln zum Erfassen einer auf die Messerwelle (14) wirkenden Kraft und
Mitteln zum Erzeugen eines entsprechenden Signals,
**gekennzeichnet durch** Verstellmittel (30, 30', 30") zum Einstellen der Ausrichtung der Messerwelle (14) relativ zu der Schneidplatte (4) in Abhängigkeit von dem Signal **durch** Verschwenken der Messerwelle (14) um mindestens zwei Schwenkachsen, die miteinander einen Winkel einschließen, so dass die an der Messerwelle angebrachten Messerschneiden im Betrieb eine parallele, Ausrichtung zur Schneidplatte aufweisen.

10. Granulator nach Anspruch 9, **dadurch gekennzeichnet, dass** die Verstellmittel (30, 30', 30") an einem Lagergehäuse (22) und insbesondere an einer Lagerplatte (28) der Messerwelle (14) angelenkt sind.

11. Granulator nach Anspruch 9 oder 10, **dadurch gekennzeichnet, dass** insbesondere drei Verstellmittel (30, 30', 30") vorgesehen sind, die bevorzugt in Umfangsrichtung symmetrisch zur Messerwelle (14) angeordnet sind.

12. Granulator nach einem der Ansprüche 9 - 11, **dadurch gekennzeichnet, dass** die Verstellmittel (30, 30', 30") motorisch oder hydraulisch oder thermisch oder pneumatisch oder manuell ansteuerbar sind.

13. Granulator nach einem der Ansprüche 9 - 12, **dadurch gekennzeichnet, dass** eine Steuereinrichtung zur Ansteuerung der Verstellmittel (30, 30', 30") in Abhängigkeit von den erzeugten Signalen vorgesehen ist.

14. Granulator nach einem der Ansprüche 9 - 13, **dadurch gekennzeichnet, dass** die Mittel zum Erfassen einer auf die Messerwelle (14) wirkenden Kraft als Mittel zur Aufnahme des Motorstromes des Antriebsmotors ausgebildet sind.

## Claims

1. A method for aligning a cutter spindle of a granulator, in particular of an underwater granulator, relative to a cutting plate (4) in operation with the following steps:
- rotationally driving the cutter spindle (14) by means of a drive motor,
- detecting a force acting on the cutter spindle (14),
- generating a corresponding signal and
- adjusting the alignment and in particular the angular alignment of the cutter spindle (14) relative to the cutting plate (4) as a function of the signal by pivoting the cutter spindle (14) about at least two pivot axes, which form an angle with one another, so that a parallel alignment of the cutter blades, arranged on the cutter spindle, to the cutting plate takes place in operation.

2. The method according to claim 1, **characterized by** the following steps:
- operating a first adjusting means (30) until the generated signal exceeds a stipulated threshold,
- operating the first adjusting means (30) in an opposite direction, until the generated signal falls below a stipulated threshold,
- operating a second adjusting means (30') until the generated signal exceeds a stipulated threshold,
- operating the second adjusting means (30') in an opposite direction, until the generated signal falls below a stipulated threshold.

3. The method according to claim 2, **characterized by** the following steps:
- operating a third adjusting means (30") until the generated signal exceeds a stipulated threshold,
- operating the third adjusting means (30") in an opposite direction, until the generated signal falls below a stipulated threshold.

4. The method according to one of claims 2 - 3, **characterized in that** through simultaneous operation of the adjusting means (30, 30', 30") an alignment of the cutter spindle (14) takes place along its longitudinal axis.

5. The method according to one of claims 1 - 4, **characterized in that** the detecting of a force acting on the cutter spindle (14) takes place by measuring the current consumption of the drive motor or by means of a load cell.

6. The method according to one of claims 1 - 5, **characterized in that** the adjusting of the alignment takes place substantially stepwise.

7. The method according to one of claims 1 - 6, **characterized in that** the adjusting of the alignment takes place in a program-controlled manner.

8. The method according to one of claims 1 - 7, **characterized in that** the detecting of the force acting on the cutter spindle (14) takes place continuously.

9. A granulator, in particular an underwater granulator, for the production of plastic granulate, with a cutting box (2) and with a cutter spindle (14), on which there is mounted a cutter holder rotatably received in the cutting box (2), which cutter holder, in operation, cooperates with a cutting plate (4), and having a drive motor which is able to be connected with the cutter spindle (14),
means for detecting a force acting on the cutter spindle (14) and
means for generating a corresponding signal,
**characterized by** adjusting means (30, 30', 30") for adjusting the alignment of the cutter spindle (14) relative to the cutting plate (4) as a function of the signal by pivoting the cutter spindle (14) about at least two pivot axes which form an angle with one another, so that the cutter blades mounted on the cutter spindle have, in operation, a parallel alignment to the cutting plate.

10. The granulator according to claim 9, **characterized in that** the adjusting means (30, 30', 30") are articulated on a bearing housing (22) and in particular on a bearing plate (28) of the cutter spindle (14).

11. The granulator according to claim 9 or 10, **characterized in that** in particular three adjusting means (30, 30', 30") are provided, which are preferably arranged in circumferential direction symmetrically to the cutter spindle (14).

12. The granulator according to one of claims 9 - 11, **characterized in that** the adjusting means (30, 30', 30") are able to be actuated by a motor or hydraulically or thermally or pneumatically or manually.

13. The granulator according to one of claims 9 - 12, **characterized in that** a control device is provided for actuating the adjusting means (30, 30', 30") as a function of the generated signals.

14. The granulator according to one of claims 9 - 13, **characterized in that** the means for detecting a force acting on the cutter spindle (14) are constructed as means for recording the motor current of the drive motor.

## Revendications

1. Procédé pour orienter un arbre à lames d'un granulateur, en particulier un granulateur sub-aquatique, par rapport à une plaque de coupe (4) en fonctionnement, comprenant les étapes suivantes :
- entraînement en rotation de l'arbre à lames (14) au moyen d'un moteur d'entraînement,
- détection d'une force agissant sur l'arbre à lames (14),
- production d'un signal correspondant et
- réglage de l'orientation et en particulier de l'orientation angulaire de l'arbre à lames (14) par rapport à la plaque de coupe (4) en fonction du signal, par pivotement de l'arbre à lames (14) sur au moins deux pivots qui incluent un angle entre eux, de telle sorte qu'une orientation parallèle des lames de coupe appliquées sur l'arbre à lames par rapport à la plaque de coupe a lieu en fonctionnement.

2. Procédé selon la revendication 1, **caractérisé par** les étapes suivantes :
- actionnement d'un premier moyen de réglage (30) jusqu'à ce que le signal produit soit situé au-dessus d'un seuil défini,
- actionnement opposé du premier moyen de réglage (30) jusqu'à ce que le signal produit soit situé en-dessous d'un seuil défini,
- actionnement d'un deuxième moyen de réglage (30') jusqu'à ce que le signal produit soit situé au-dessus d'un seuil défini,
- actionnement opposé du deuxième moyen de réglage (30') jusqu'à ce que le signal produit soit situé en-dessous d'un seuil défini.

3. Procédé selon la revendication 2, **caractérisé par** les étapes suivantes :
- actionnement d'un troisième moyen de réglage (30") jusqu'à ce que le signal produit soit situé au-dessus d'un seuil défini,
- actionnement opposé du troisième moyen de réglage (30") jusqu'à ce que le signal produit soit situé en-dessous d'un seuil défini.

4. Procédé selon l'une des revendications 2 - 3, **caractérisé en ce que** l'actionnement simultané des moyens de réglage (30, 30', 30'') produit une orientation de l'arbre à lames (14) le long de son axe longitudinal.

5. Procédé selon l'une des revendications 1 - 4, **caractérisé en ce que** la détection d'une force agissant sur l'arbre à lames (14) s'effectue par la mesure du courant absorbé du moteur d'entraînement ou au moyen d'un capteur dynamométrique.

6. Procédé selon l'une des revendications 1 - 5, **caractérisé en ce que** le réglage de l'orientation s'effectue essentiellement par étapes.

7. Procédé selon l'une des revendications 1 - 6, **caractérisé en ce que** le réglage de l'orientation s'effectue essentiellement piloté par programmation.

8. Procédé selon l'une des revendications 1 - 7, **caractérisé en ce que** la détection de la force agissant sur l'arbre à lames (14) s'effectue de façon continue.

9. Granulateur, en particulier granulateur sub-aquatique pour produire du granulat synthétique, comprenant un caisson de coupe (2) et un arbre à lames (14) sur lequel un support de lames reçu de façon rotatif dans le caisson de coupe (2) est maintenu, qui coopère avec une plaque de coupe (4) en fonctionnement et comprenant un moteur d'entraînement pouvant être relié à l'arbre à lames (14),
des moyens pour détecter une force agissant sur l'arbre à lames (14) et
des moyens pour produire un signal correspondant,
**caractérisé par** des moyens de réglage (30, 30', 30'') pour régler l'orientation de l'arbre à lames (14) par rapport à la plaque de coupe (4) en fonction du signal, par pivotement de l'arbre à lames (14) sur au moins deux pivots qui incluent un angle entre eux, de telle sorte que les lames de coupe appliquées sur l'arbre à lame présentent en fonctionnement une orientation parallèle à la plaque de coupe.

10. Granulateur selon la revendication 9, **caractérisé en ce que** les moyens de réglage (30, 30', 30'') sont articulés sur un logement de palier (22) et en particulier sur un plateau de palier (28) de l'arbre à lames (14) .

11. Granulateur selon la revendication 9 ou 10, **caractérisé en ce qu'**en particulier trois moyens de réglage (30, 30', 30'') sont prévus qui sont disposés de préférence dans le sens du pourtour symétriquement à l'arbre à lames (14).

12. Granulateur selon l'une des revendications 9 - 11, **caractérisé en ce que** les moyens de réglage (30, 30', 30'') peuvent être commandés de façon motrice, hydraulique ou thermique ou pneumatique ou manuellement.

13. Granulateur selon l'une des revendications 9 - 12, **caractérisé en ce qu'**un dispositif de commande est prévu pour commander les moyens de réglage (30, 30', 30'') en fonction des signaux produits.

14. Granulateur selon l'une des revendications 9 - 13, **caractérisé en ce que** les moyens pour détecter une force agissant sur l'arbre à lames (14) sont conçus en tant que moyens pour recevoir le courant de moteur du moteur d'entraînement.
